# EUROPEAN PATENT SPECIFICATION

(11) **EP 2 518 940 B1**
(45) Date of publication and mention of the grant of the patent: **08.04.2015**
(21) Application number: 12150788.3
(22) Date of filing: 11.01.2012
(51) Int. Cl.: H04L 12/24, H04L 12/26

(54) **Automatic network topology detection and modeling**
Automatische Netzwerktopologieerkennung und -modellierung
Détection et modelage de topologie de réseau automatique

(30) Priority: 29.04.2011 US 201113098135
(43) Date of publication of application: 31.10.2012
(73) Proprietor: Tektronix, Inc., Beaverton, Oregon 97077-0001 (US)
(72) Inventor: Ivershen, Aleksey G., Garland, TX 75040 (US); Pipkin, Ryan L., Prosper, TX 75078 (US); Han, Sanchu, Allen, TX 75013 (US)
(74) Representative: Hargreaves, Timothy Edward

(56) References cited:
- US-A1- 2006 168 207
- US-A1- 2009 141 659

## Description

### TECHNICAL FIELD

Embodiments are directed, in general, to identifying network nodes and interfaces in a telecommunications network and, more specifically, to automatically detecting a network topology.

### BACKGROUND

Network topology provides a mapping of the nodes and interconnection in a communications network. Knowledge of a network's topology is necessary to monitor the operation of the network and to identify and resolve any problems that arise in the network. Typically, network topology has been manually created based upon knowledge of which network elements have been put into service. However, tracking the active network nodes and interconnections can be difficult as the network gets larger, more complex and geographically diverse. Network operators need a complete view of the current state and composition of their network. Existing network topology tracking may not reflect how the user perceives the network. Large amounts of time and effort are required to manually create and update a network topology.

In telecommunications networks, new nodes and links between nodes are added often as the network grows or is updated. For example, nodes may be added to increase the network coverage area and number of subscribers supported. New links may be added between these nodes. Service providers and network operators typically monitor their network to evaluate operating conditions and to identify and correct network problems. A monitoring system used for this purpose needs to know the up-to-date network topology under observation, including the new monitored nodes and links, in order to provide correct and accurate measurements and in addition to correlate the measurements to nodes and links (e.g. correlate the alarms to the network entity affected by such event).

The network topology used by the network monitoring system may be updated manually by entering each new node and all associated new interconnections to other nodes. However, manual configuration of the network topology is not desired because it is labor intensive and error prone. Additionally, such manual topology updates typically are delayed some period of time after actual physical updating of the network. In the time between a network update and a manual topology update, the network monitoring system will not be able to properly analyze network protocols or operation. US 2009/141659 A1 describes a method and an apparatus for concurrent topology discovery. In a computer network, several nodes are selected as discovery nodes for probing the remaining node in order to find out which are their neighbouring nodes. The probing is performed recursively. Several discovery nodes may operate in parallel without the problem of intersection of the search for neighbouring nodes. This is achieved by dividing the network in to several node groups. US 2006/168207 describes a packet-based wireless network visualization system that is configured to generate visual representations of network topology and packet flows.

### SUMMARY

The invention is defined by the appended independent claims. Embodiments of the network topology monitoring methods and systems disclosed herein provide a complete view of the current state and composition of the network. The network topology is generated automatically by a network monitoring system thereby eliminating the need to manually adjust the topology as the network evolves. The network operator may also correct, modify, or force-detect network topology.

The monitoring system uses a predefined topology data model that inter-relates the network components in a manner that allows for detection and updating of network nodes, ports, physical links, logical links, and SCTP associations. Network components can be treated individually or in groups to support user applications and analysis.

Embodiments of the topology detection system use a generic data model framework that can be used with an IP-based network protocol. Typically, multiple monitoring probes in the network will see traffic from the same network elements. The topology information from each probe must be mediated to identify overlapping detections and to create one view of the network topology. In one embodiment, monitoring probes first identify network nodes, then identify links between the nodes, and finally identify SCTP associations. The monitoring probes detect data in captured PDUs and populate the topology data model using this data.

### BRIEF DESCRIPTION OF THE DRAWINGS

Having thus described the invention in general terms, reference will now be made to the accompanying drawings, wherein:
FIGURE 1 is a high level block diagram of a communications network with a monitoring system;
FIGURE 2 illustrates one example of a topology data model used in one embodiment;
FIGURE 3 is a block diagram illustrating the functional operation of the monitoring system server and probes according to one embodiment; and
FIGURE 4 is a flowchart illustrating how topology data propagates through the monitoring system.

### DETAILED DESCRIPTION

The invention now will be described more fully hereinafter with reference to the accompanying drawings. This invention may, however, be embodied in many different forms and should not be construed as limited to the embodiments set forth herein. Rather, these embodiments are provided so that this disclosure will be thorough and complete, and will fully convey the scope of the invention to those skilled in the art. One skilled in the art may be able to use the various embodiments of the invention.

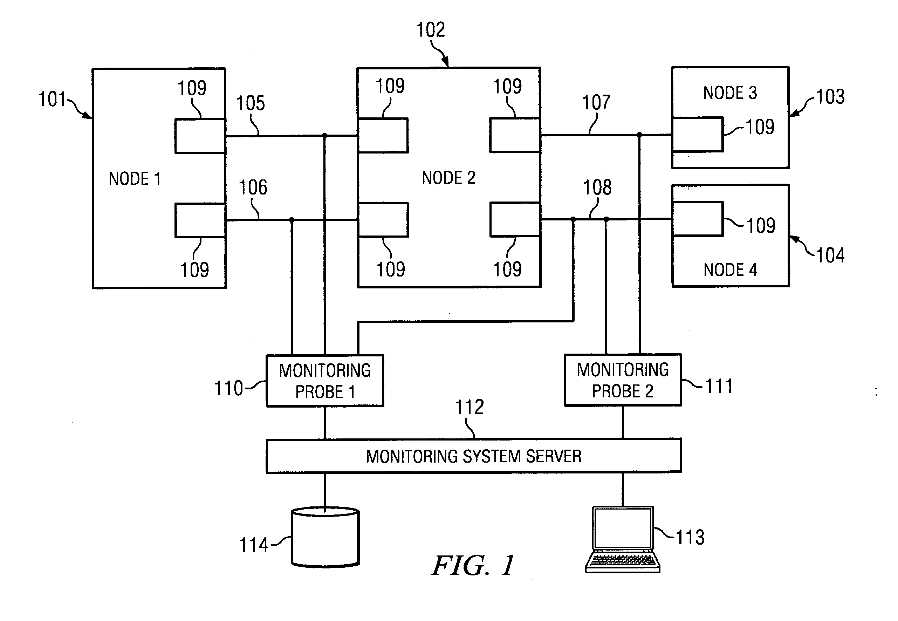

FIGURE 1 is a high level block diagram of a communications network with a monitoring system. Network nodes 101-104 communicate with each other over logical links 105-108, which are coupled between ports 109 on nodes 101-104. One or more logical links (not shown) may also be established between nodes 101-104. A monitoring system, including, for example, monitoring probes 110, 111 and monitoring system server or controller 112, is coupled to the interfaces 105-108. Monitoring probes 110,111 collect packet data units (PDUs) and session data from the interfaces. A service provider or network operator may access data from the monitoring system via user interface station 113. The monitoring system may further comprise internal or external memory 114 for storing captured data packets, user session data, call records configuration information, software application instructions, and network topology data.

The monitoring system may be located in one location, such as a server or equipment rack in which probes 110, 111 run on separate blades. Alternatively, probes 110 and 111 may be located near one or more of nodes 101-104 and remote from monitoring system server/controller 112. Probes 110, 111 and monitoring system server/controller 112 comprise one or more processors running one or more software applications.

The monitoring probes 110, 111 and monitoring system server 112 may incorporate protocol analyzer, session analyzer, and/or traffic analyzer functionality that provides OSI (Open Systems Interconnection) layer 2 to layer 7 troubleshooting by characterizing IP traffic by links, nodes, applications, and/or servers on the network. Such functionality is provided, for example, by the GeoProbe G10 platform, including the Iris Analyzer Toolset applications and SpIprobes, from Tektronix Incorporated. It will be understood that the monitoring system illustrated in FIGURE 1 is a simplified example and that any number of interconnected monitoring probes may be coupled to one or more interfaces within the network. A single monitoring probe may capture data from a particular interface, or two or more probes may be coupled to one interface.

The monitoring probes 110, 111 may be coupled to network interfaces via packet capture devices, such as high-speed, high-density probes that are optimized to handle high bandwidth IP traffic. The monitoring system passively captures message traffic from the interfaces without interrupting the network's operation. The monitoring system may capture and correlate the packets associated with specific data sessions on network interfaces. The related packets can be combined into a record for a particular flow, session or call on the network.

In an alternative embodiment, the monitoring system may be an active component, such as a software agent, that resides on one or more of nodes 101-104, for example, and that captures data packets passing into or out of the node.

Knowledge of a monitored network's topology is a core part of any network monitoring solution. The ultimate goal for any passive monitoring or probing system is to have all network topology auto-detected, including all network nodes, logical and physical links, SCTP associations, radio cells, and the like. Such a feature would significantly reduce installation and maintenance costs and would allow a network to respond to network evolution without requiring intervention from a network operator.

One embodiment of a topology detection schemas fulfills the following requirements:
1. The topology data model and processing model account for multiple probing agents in the distributed monitoring system, where the same network elements may be detected and monitored by several of the probing agents;
2. Topology detection is not limited to on-demand or campaign-based detection, but is performed on a continuous (i.e. 24/7) basis to detect ongoing topology changes;
3. Topology detection software in monitoring probes performs minimal or no work on traffic from already-detected elements;
4. The detection scheme supports detection of: Physical Ports, Network Nodes, Servers, Physical Links, Logical Links, and Stream Control Transmission Protocol (SCTP) associations;
5. The detection scheme performs full SCTP association detection, including multi-homed and load-shared (MH) associations, payload protocol identifier (PPID) map detection, and graceful handling of association re-establishment;
6. The central controlling entity for topology detection must be able to handle simultaneous detection of elements by multiple probes and perform mediation functions; and
7. The topology model must be IP-centric because networks are moving almost exclusively towards IP transport.

Existing data models and processing models suffer from one or more of the following shortcomings:
1. Confined to a single monitoring box installation;
2. Topology detection is on-demand or campaign-based instead of an always-on or 24/7 solution;
3. The topology detection scheme uses a deferred stream-and-analyze architecture instead of real-time monitoring;
4. The topology detection cannot handle SCTP detection scenarios to an acceptable degree in 24/7 auto-detection environment;
5. Detection is confined to one technology niche or standard (e.g. UTRAN or SIGTRAN) versus providing generic processing and data models applicable to any technology; and
6. Topology detection is provided either in a force-configuration method or an auto-discovery method, but not co-existence of both.

The unified data and processing model targeted disclosed herein completely fulfills the requirements set forth above and overcomes the shortcomings of existing solutions. Use of a topology detection system such as the one described herein provides significant operational expenditure (OpEx) savings as well as a superior quality of experience for both network-monitoring vendors and network operators.

### Topology Data Model

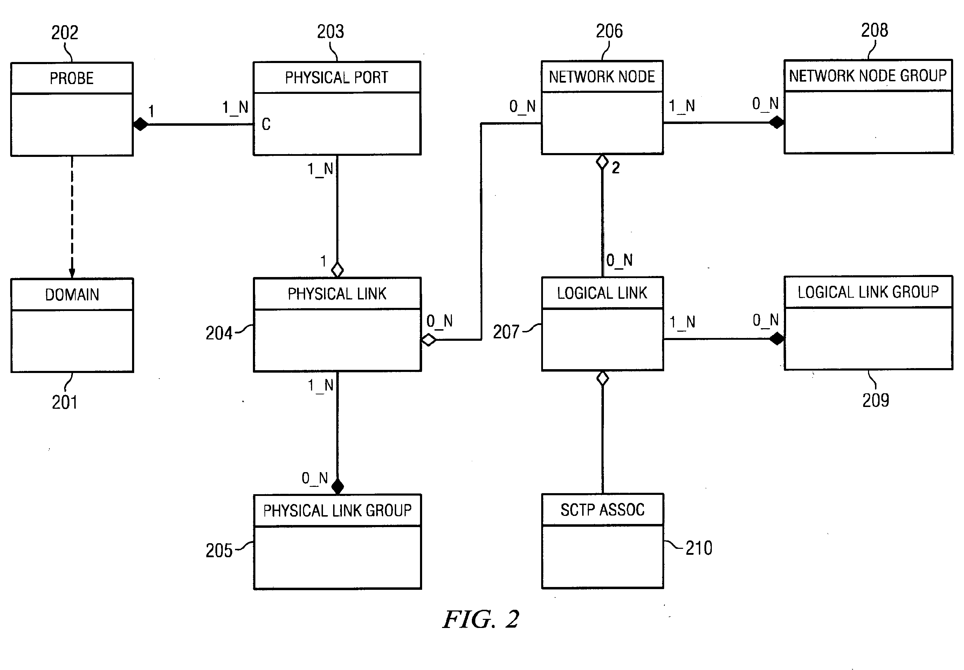

FIGURE 2 illustrates one example of a topology data model. The topology consists of a set of auto-detected or provisioned elements. The topology elements may be stored on a monitoring system server so that data regarding the network topology is available to customer-facing applications and internal probe applications. The types of objects shown in the data model along with their properties, relations, and auto-detection aspects are described below. Each topology element may be assigned an identifier (ID) that is unique within a controlling monitoring system server. Globally unique IDs for use with other monitoring systems or for server aggregation may be constructed by adding a monitoring system server ID to the element identifier. The topology elements may be expanded by adding new attributes or relations.

DOMAIN element 201 may be used to represent different segments of a monitored network, such as regions/subregions or markets/submarkets. Using the defined domains, users may separate different parts of the network for independent analysis or review. For example, DOMAIN elements may be used to separately identify the core network in one area versus a data center in a different area. DOMAINS may also be used to prevent "collisions" between monitored objects in the case where IP address pools are reused in different segments of the network. Every monitoring probe may be assigned to a DOMAIN. The topology information between domains may be independent. For example, if a probe in DOMAIN A detects a node with IP address "IP1," then the same "IP1" address in DOMAIN B actually refers to a different node.

PROBE element 202 is equivalent to one physical monitoring probe. In one embodiment, the PROBE element 202 in the data model has the properties and attributes illustrated in Table 1.

**TABLE 1 - PROBE ATTRIBUTES**

| **PROPERTY** | **TYPE** | **DESCRIPTION** |
|---|---|---|
| ID | integer | Unique identifier assigned by the monitoring system server when a PROBE object is created. |
| TYPE | enumerated | Identifies the probe type. The probe TYPE may be embedded in the ID. For example, the probe TYPE may be embedded in the top 4 bits of the probe ID. Different types of probes may be assigned to different numerical ranges of the TYPE value. |
| NAME | string | Human-readable name of the probe. The monitoring system server should ensure uniqueness of the probe names. |
| PRIMARY IP ADDRESS | IPv4,IPv6 | The probe's IPv4 and/or IPv6 public address. |
| ENABLED | boolean | This is a flag allowing the user to enable/disable the entire probe. When the flag is false, no traffic on the probe is processed. |

Each PROBE element is related to one or more PHYSICAL PORT elements (203). Transiently through the PHYSICAL PORT elements (203), each PROBE element is related to one or more PHYSICAL LINKs (204).

The PROBE elements 202 are auto-detected when a new probe makes contact with the monitoring system server. The new probe sends all the properties required to complete Table 1 to the monitoring system server for creation of new PROBE element in the topology. In particular, the probe sends its type, name, and primary IP addresses.

The PHYSICAL PORT element 203 is equivalent to one monitored port on a probe interface card. A typical probe interface card has 4 or 8 ports, but there may be more ports on a probe interface card in the future. In one embodiment, the PHYSICAL PORT element 203 in the data model has the properties and attributes illustrated in Table 2.

**TABLE 2 - PHYSICAL PORT ATTRIBUTES**

| **PROPERTY** | **TYPE** | **DESCRIPTION** |
|---|---|---|
| ID | integer | Unique identifier assigned by the monitoring system server when a PHYSICAL PORT object is created. |
| TYPE | enumerated | Identifies the type of interface, such as 1G, 10G, optical, copper, etc. |
| DIRECTION | enumerated | Identifies the physical direction of the port. In one embodiment, values may include: UNKNOWN, RX (uplink), TX (downlink), RX/TX (bi-directional or SPAN), RX/TX DUP (bi-directional with duplicates). |
| ENABLED | boolean | This is a flag that allows the user to enable/disable monitoring on a particular port. When the flag is false, no traffic from the port should be processed. |
| PROBE | reference or ID | Identifies the probe that this port belongs to. |

Each PHYSICAL PORT element 203 is related to exactly one PROBE element 202. Each PHYSICAL PORT element 203 is a member of one PHYSICAL LINK element 204. In one embodiment, PHYSICAL PORT elements 203 are used by the monitoring system's traffic analyzer and/or protocol analyzer as key performance indicator (KPI) dimensions for port monitoring.

PHYSICAL PORTs are auto-detected when a new probe makes contact with the monitoring system server. The probe sends a list of all known physical ports along with all properties. The monitoring system server assigns unique port IDs to each physical port. Because the direction of the port is very difficult to detect, the direction and mapping to PHYSICAL LINKs may be left as a manual configuration step. Accordingly, the UNKNOWN value may be used as a default for the direction on new ports. The monitoring probes may treat ports with the direction set to UNKNOWN as if the ports were RX/TX ports.

The PHYSICAL LINK element 204 is a bi-directional Ethernet link, consisting of one or more PHYSICAL PORTs. A PHYSICAL LINK is distinct from a LOGICAL LINK, which is further described below. In one embodiment, the PHYSICAL LINK element 204 in the data model has the properties and attributes illustrated in Table 3.

**TABLE 3 - PHYSICAL LINK ATTRIBUTES**

| **PROPERTY** | **TYPE** | **DESCRIPTION** |
|---|---|---|
| ID | integer | Unique identifier assigned by the monitoring system server when the PHYSICAL LINK object is created. |
| NAME | string | Human-readable name of the link. |
| PORTS | references or IDs | Identifies one or more PHYSICAL PORTs that comprise this link. |
| VLANs | integer | Optional list of VLANs to defined virtual physical links. |
| PROBE | reference or ID | Identifies the probe that this link belongs to. |

Each PHYSICAL LINK element 204 is related to exactly one PROBE element 202. Each PHYSICAL LINK element 204 is related to one or more PHYSICAL PORT elements 203. For example, PHYSICAL LINK may have one PORT in case of one bi-directional tap (SPAN), or four PORTs in case of uni-directional load-shared taps. PHYSCAL LINKs may further be broken down by defining VLANs, so that one PHYSICAL LINK would correspond to one or more Ethernet-level virtual links. In one embodiment, PHYSICAL LINK elements 204 are used by the monitoring system's traffic analyzer and/or protocol analyzer as key performance indicator (KPI) dimensions for monitored element selection.

In one embodiment, the PHYSCIAL LINKs are not auto-detected because the decomposition of ports into physical links can be a very difficult problem to solve in general. Adding PHYSICAL LINK elements 204 and mapping ports to the PHYSICAL LINKs 204 may be left as a manual configuration step. Such configuration would be a one-time step that would need to be adjusted in cases when physical ports wiring changes.

The PHYSICAL LINK GROUP element 205 is used to group together one or more PHYSICAL LINK elements 204. The PHYSICAL LINK GROUP elements 205 are used by the user interface (UI) applications. For example, the PHYSICAL LINK GROUP element 205 may be used by a traffic analyzer to display KPIs for a selected set (or group) of links versus displaying one link at a time. PHYSICAL LINK GROUP elements 205 may be part of the topology information, but they are typically user interface artifacts, so the monitoring probes should not be concerned with PHYSICAL LINK GROUPs 205. In one embodiment, the PHYSICAL LINK GROUP element 205 in the data model has the properties and attributes illustrated in Table 4.

**TABLE 4 - PHYSICAL LINK GROUP ATTRIBUTES**

| **PROPERTY** | **TYPE** | **DESCRIPTION** |
|---|---|---|
| ID | integer | Unique identifier of the physical link group. |
| NAME | string | User-assigned name of the group. |
| PHYSICAL LINKS | IDs or references | The list of physical links that are members of this group. |

One or more PHYSICAL LINK elements 204 belong to a PHYSICAL LINK GROUP 205. A given link may be a member of multiple groups. In one embodiment, the PHYSICAL LINK GROUP elements 205 are provisioned by the user and are not auto-detected.

NETWORK NODE element 206 represents one of various active network elements with IP addresses, such as a server, Serving GPRS Support Node (SGSN), Gateway GPRS Support Node (GGSN), MME (Mobility Management Entitiy), eNodeB (enhanced NodeB), Authentication, Authorization and Accounting (AAA) Server, or the like. The IP addresses are the key to NODE definition in using the topology model described herein. Therefore, an IP address cannot belong to more than one node. The IP address used to identify the NETWORK NODE 206 may be a list of IP addresses or a range of IP addresses. Routers may be considered network nodes in one embodiment and are tracked by the network topology if Simple Network Management Protocol (SNMP) monitoring is desired. In one embodiment, the NETWORK NODE element 206 in the data model has the properties and attributes illustrated in Table 5.

**TABLE 5 - NETWORK NODE ATTRIBUTES**

| **PROPERTY** | **TYPE** | **DESCRIPTION** |
|---|---|---|
| ID | integer | Unique identifier assigned by the monitoring system server when a NETWORK NODE is either auto-detected or force-detected and added to the topology set. |
| NAME | string | Human-readable name of the network node. In one embodiment, the name is imported from the network's operational support system (OSS). The NAME may be defaulted to TYPE/IP string, such as "GGSN/125.1.1.1". |
| TYPE | enumerated | Identifies the type of network node. Examples of network node types are defined below in Table 6. |
| IP ADDRESSES | IPv4, IPv6 | The network node's IPv4 or IPv6 public address, which may be a list of IP addresses and/or a ranges of IP addresses. |
| PROBES | references or IDs | A list of monitoring probes where this network node was observed or detected. |

In general, the NETWORK NODES element should allow flexibility in terms of adding attributes/properties. Attributes can be separated into two categories. One category includes essential attributes that need to be explicit and known by the probes. The other category includes attributes that are not needed by the probes, but that are used exclusively for the UI and applications. Examples of such attributes are geographical location, map coordinates, custom icon, and the like. Other protocol-specific attributes may be added to the nodes, such as Radio Network Controller identifier (RNC ID), Mobility Management Entity identifier (MME ID), point code, network indicator, or the like. Visualization attributes, such as geographical location, may be added as needed.

Each NETWORK NODE element 206 is associated with zero or more PROBE elements 202, which are where the network node was observed. Force-detected or imported NETWORK NODEs may not have the assigned PROBEs 202. When the monitoring probe detects traffic from/to a network node, the monitoring server's topology information is updated. The NETWORK NODE element 206 represent an endpoint of LOGICAL LINK element 207. There may be zero or more logical links between the network nodes.

Generally, NETWORK NODE element 2-6 is auto-detected by the monitoring probes. For some types of nodes/protocols, auto-detection may not be practical. For example, as there are thousands of HTTP, DNS, POP3, SMTP servers. In one embodiment, the monitoring probe will not auto-detect these nodes, but the user may add these servers to the topology manually if desired. In another embodiment, the monitoring probe would detect these servers only in a user-provisioned IP address range.

The NETWORK NODE GROUP element 208 is used to group together one or more NETWORK NODE elements 206. In one embodiment, the NETWORK NODE GROUP element 208 is used exclusively by the UI applications. For example, a transaction analyzer application may use the NETWORK NODE GROUP element 208 to display KPIs for an entire group of nodes at once versus displaying one node at a time. NETWORK NODE GROUP element 208 is part of the topology information, but because it is created for the UI applications alone, the monitoring probes should not be concerned with creating or updating the NETWORK NODE GROUP element 208. In one embodiment, the NETWORK NODE GROUP element 208 in the data model has the properties and attributes illustrated in Table 7.

**TABLE 7 - NETWORK NODE GROUP ATTRIBUTES**

| **PROPERTY** | **TYPE** | **DESCRIPTION** |
|---|---|---|
| ID | integer | A unique identifier of the network node group. |
| NAME | string | A user-assigned name for the group. |
| NETWORK NODEs | IDs or references | The list of network nodes that are members of this group. |

One or more NETWORK NODE elements 206 belong to a NETWORK NODE GROUP element 208. A given node may be a member of multiple network node groups.

NETWORK NODE GROUP element 208 is always provisioned by the user and never auto-detected.

The LOGICAL LINK element 207 is an abstractions of the logical-level connections in the network. Typical examples of logical links are IP paths and SCTP connections. LOGICAL LINK element 207 may be grouped at the UI level to provide a level of aggregation for the customer. There may be more than one logical link between two nodes and the links may be differentiated by L4 (OSI layer 4) properties. Accordingly, it is possible to have LOGICAL LINK elements such as:
- a full set of connections between two nodes when L4 information is omitted;
- specific L4 protocol connections between two nodes (e.g. all TCP traffic or all UDP traffic);
- specific port-to-port connection between two nodes (e.g. all UDP traffic between ports X and Y); and
- fixed port to ephemeral port connection between two nodes (e.g. fixed SCTP port on one side and ephemeral port on the other side).
This schema has the most flexibility in defining LOGICAL LINK elements 207 and allows for clean tracking of persistent and short-lived SCTP associations. The L4 properties cannot overlap (e.g. two SCTP associations with overlapping ports between same nodes are not allowed).

Because SCTP associations may be set up and torn down at any time and are potentially short-lived, the LOGICAL LINK element 207 is used as a dimension for KPIs and status monitoring. The two nodes associated with the LOGICAL LINK element 207 are designated as server and client. The designation is protocol-specific. Typically, the uplink node is designated as the server, and the downlink node is designated as the client (e.g. in LTE: MME - server/eNB - client; and on Gn interface: GGSN - server/SGSN - client). The direction of the packets on the links is set relative to the server node (RX is uplink, TX is downlink).

In one embodiment, the LOGICAL LINK element 207 in the data model has the properties and attributes illustrated in Table 8.

**TABLE 8 - LOGICAL LINK ATTRIBUTES**

| **PROPERTY** | **TYPE** | **DESCRIPTION** |
|---|---|---|
| ID | integer | A unique identifier assigned by the monitoring system server when a LOGICAL LINK is either auto- or force-detected and added to the topology set. |
| NAME | string | Human-readable name of the logical link. |
| SERVER NETWORK NODE | reference or ID | Server/Destination endpoint of the logical link. |
| CLIENT NETWORK NODE | reference or ID | Client/Source endpoint of the logical link. |
| L4 PROTOCOL | integer | An optional L4 protocol to differentiate between different logical links between the same two nodes. |
| SERVER L4 PORT | integer | An optional server L4 port used to define the connection, such as for SCTP. Port "zero" is used as a wildcard. |
| CLIENT L4 PORT | integer | An optional client L4 port used to define the connection, such as for SCTP. Port "zero" is used as a wildcard. |

The LOGICAL LINK element 207 could include an "enabled" flag in other embodiments, such as for enabling/disabling KPIs or a session analyzer for a LOGICAL LINK.

A LOGICAL LINK element 207 has exactly two NETWORK NODE element 206 endpoints. There may be more than one LOGICAL LINK 207 between two NETWORK NODEs 206. Through the NETWORK NODEs 206, the LOGICAL LINK elements 207 will also have relations to PROBE elements 202 via the intersection of the two NETWORK NODE element 206 properties.

Generally, the LOGICAL LINK 207 is auto-detected by the monitoring probes. Most of the typical link types handled by the monitoring probe are detected through SCTP association tracking.

The LOGICAL LINK GROUP element 209 is used to group together one or more LOGICAL LINK elements 207. The LOGICAL LINK GROUP element 209 is used exclusively by the UI applications, for example by a transaction analyzer to display KPIs for a group of links versus one displaying link at a time. LOGICAL LINK GROUP element 209 is part of the topology information like NETWORK NODE GROUP 208 and PHYSICAL LINK GROUP 205. However, GROUP 209 is a user interface artifact, and the monitoring probes should not be concerned with creating or updating LOGICAL LINK GROUP element 209. In one embodiment, the LOGICAL LINK GROUP element 209 in the data model has the properties and attributes illustrated in Table 9.

**TABLE 9 - LOGICAL LINK GROUP ATTRIBUTES**

| **PROPERTY** | **TYPE** | **DESCRIPTION** |
|---|---|---|
| ID | integer | A unique identifier of the logical link group. |
| NAME | string | A user-assigned name of the logical link group. |
| LOGICAL LINKS | IDs or references | The list of logical links that are members of this group. |

One or more LOGICAL LINK elements 207 belong to each LOGICAL LINK GROUP element 209. A given link may be a member of multiple logical link groups.

LOGICAL LINK GROUP elements are provisioned by the user and are not auto-detected by the monitoring probes.

The SCTP ASSOCIATION element 210 is, in general, a multi-homed load-shared SCTP connection between two NETWORK NODE elements 206. The SCTP ASSOCATION element has to be detected and tracked in order for SCTP session correlation to be possible. In one embodiment, due to the nature of SCTP tracking and issues with ephemeral ports and SCTP connection re-establishment, the SCTP associations are tracked internally by the probe interface hardware in real time and not persisted in the topology database on the monitoring server. In that case, only LOGICAL LINK elements 207 are persisted, and there may be on-to-one relation between actual SCTP Associations and logical links.

To satisfy the use cases for SCTP Association status and real-time information, the monitoring probes provide an interface to retrieve detailed up-to-date information about tracked SCTP Associations and their status on demand. In one embodiment, the SCTP ASSOCIATION element 210 in the data model has the properties and attributes illustrated in Table 10.

**TABLE 10 - SCTP ASSOCIATION ATTRIBUTES**

| **PROPERTY** | **TYPE** | **DESCRIPTION** |
|---|---|---|
| ID | integer | An internal identifier for the SCTP association that is unique within a monitoring probe. |
| IP ADDRESSES | IPv4,IPv6 | IP addresses of end nodes. May be multiple for multi-homing. |
| PORTs | integers | The SCTP ports for the Association. |

These attributes are important for external users of SCTP Association information, such as a UI application or topology analyzer. Other attributes may be added by the probe interface hardware as needed for association tracking.

Each SCTP ASSOCIATION element 210 belongs to zero or one LOGICAL LINK element 207. The LOGICAL LINK element 207 may not be available in the initial stages of auto detection.

The SCTP ASSOCIATION elements are detected and managed internally by the probe interface hardware.

### Topology Detection Processing Model

Two of the approaches available to detect and mediate topology information in a distributed monitoring system are the PUBLISH-SUBSCRIBE approach and the NOTIFY-SUBSCRIBE approach. In the PUBLISH-SUBSCRIBE approach, when a new topology element is detected, the monitoring probe creates the object, publishes it to the monitoring system server and all of the other probes. The detecting probe immediately starts monitoring the new topology element, such as collecting KPIs. An advantage of this approach is that no data will be lost in most cases, since monitoring commences immediately after detection. Disadvantages of this approach include the complexity created by detection of the same elements by multiple probes and the mediating that must be performed for such duplicate detections. This approach also requires either multiple probe-unique identifiers for the same elements, or modifications to the collected data after the monitoring system server assigns a globally unique ID to the newly detected network element. A problem involving double-commits and race conditions may be crated where the same topology object is modified by the probe's PUBLISH mechanism and SUBSCRIBE mechanism at the same time.

In the NOTIFY-SUBSCRIBE approach, there is one exclusive owner of the "master" topology information. The owner receives update notifications from multiple probes, mediates the updates, and commits the changes to the topology. The committed updates are subsequently communicated to the probes. An advantage of this approach is that it is simple, deterministic, and does not have the problems associated with PUBLISH-SUBSCRIBE approach. A disadvantage of the PUBLISH-SUBSCRIBE approach is the time lag between the detection of an element, and propagation of a committed update through the monitoring system to distributed probes. As a result, some data will initially be lost, because the probe does not start monitoring the element until after it receives a master topology update from the server.

In an embodiment described herein, the NOTIFY-SUBSCRIBE approach is selected for topology detection and monitoring. The relatively small lag between the detection and the start of monitoring is considered to be of minor importance in actual deployments. Accordingly, the benefits of the NOTIFY-SUBSCRIBE approach outweigh this delay disadvantage.

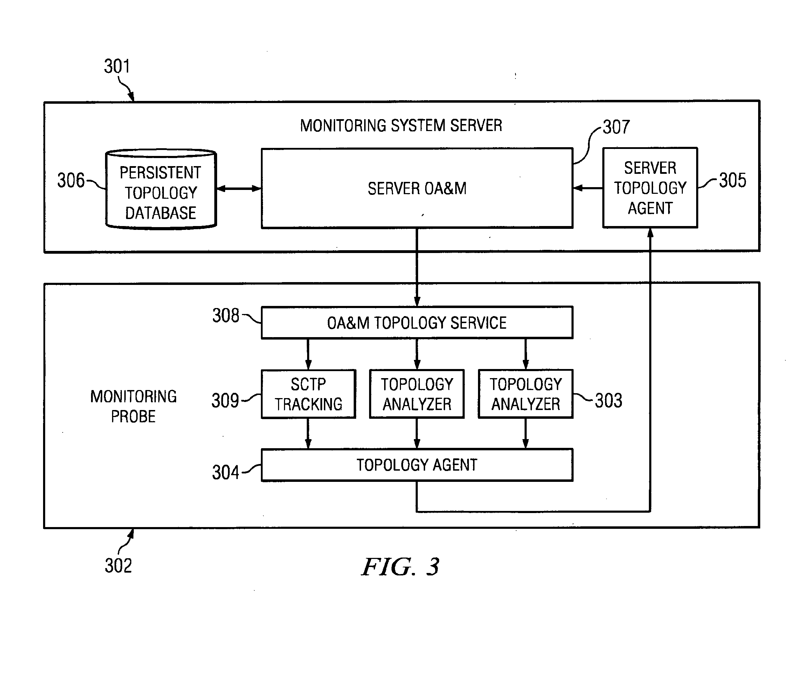

FIGURE 3 is a block diagram illustrating the functional operation of the monitoring system server 301 and probes 302 according to one embodiment. Probe 302 includes topology analyzers 303 that receive incoming PDUs after decoding. Topology analyzers 303 may be modules that exist in the traffic processor threads, for example. Topology analyzers 303 examine incoming PDUs and their descriptors to determine whether new topology information can be obtained from the data. Topology analyzers 303 also detect network nodes, logical links, and their attributes based on control signaling. Topology analyzers 303 may further detect SCTP Association PPID mappings using packet decoding heuristics, for example. Topology analyzers 303 send topology updates to topology agent 304.

Probe topology agent 304 may be a thread or process and is responsible for receiving topology updates from probe topology analyzers 303. Topology agent 304 mediates and throttles updates as needed to prevent double notifications and update floods. Topology agent 304 maintains the probe's communications interface and forwards mediated topology updates to the server topology agent 305.

Server topology agent 305 is a process on server 301 that is responsible for accepting topology updates from probe 302. Server topology agent 305 also mediate the topology updates between multiple probes 302 in cases when same elements have been detected multiple times. Server topology agent 305 is responsible for assigning globally unique IDs to new topology elements and serves as the commit point for import or force-detect scenarios. Server topology agent 305 also provides an interface to the monitoring system's operations, administration, and management (OA&M) topology database 306, which it updates it with new topology information.

The monitoring system includes a server OA&M subsystem 307. The OA&M subsystem 307 provides topology related services including maintaining up-to-date persistent network topology information 306. OA&M subsystem 307 also provides an interface to server applications and clients for retrieving and querying the topology via API. OA&M subsystem 307 operates with OA&M topology service 308 to update probes 302 with pertinent topology information in real-time. To maintain efficiency, the entire topology set is not provided to the probes 302. Instead, the probes receive only the topology subset that is relevant to each probe. OA&M subsystem 307 is also responsible for updating the probes with delta topology information in real-time, which includes only the topology elements that have been changed. Finally, OA&M subsystem 307 keeps the server topology and probe topology synchronized at all times.

Probe 302 may further comprise an SCTP tracking module 309 having logic that provides detection and audit of SCTP Associations, reassembly and debundling of SCTP packets, and sending SCTP Associations events, such as additions/deletions/modifications, to the topology agent 304.

### Automatic Network Node Detection Logic

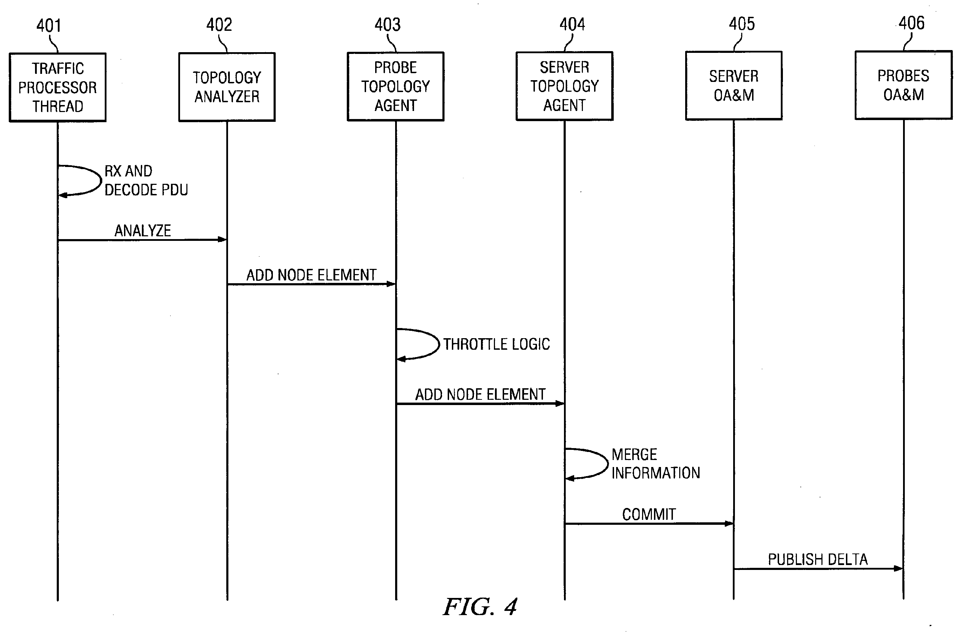

FIGURE 4 is a flowchart illustrating how topology data propagates through the monitoring system. Traffic processor thread 401 receives a control plane PDU from network interface hardware and decodes it. Traffic processor 401 then passes the PDU to topology analyzer module 402 that resides in the same thread. Based on protocol-specific detection rules, and the presence/absence of a valid server ID from the interface hardware, topology analyzer 402 determines when a new network node should be created. The topology analyzer 402 does not need to query OA&M in this case, because if the server ID is not present, then the node was neither force-detected nor auto-detected and does not exist in OA&M.

Topology analyzer 402 sends a message to probe topology agent 403 to create a new network node. The detected properties for the new network node include: TYPE, IP ADDRESS, PHYSICAL LINK, and APPLICATION ID. Probe topology agent 403 determines whether new element addition is subject to throttling, which allows only one pending element addition request at a time. If throttling is not active for this IP address, the probe topology agent 403 sends a message to server topology agent 404 to create a new network node. Server topology agent 404 checks the new node against the existing topology database, and then mediates and merges the data, if the node already existed, or creates a new object.

The changes to the network node element are forwarded to server OA&M 405 to be stored in the topology database. The new element information is also published to probe subscribers via probe OA&M 406. The probes then begin monitoring the new network node. After the new node is detected and the server ID is available on the probe, there still may need to be updates to the node object. For example, the list of physical links, probes, and observed application IDs may need to be updated. To avoid querying OA&M processing every incoming PDU, network node updates could be tied to the processing of transaction analysis KPIs or some other routine task.

### Topology Detection System

The following is a description of an example monitoring system using the topology detection system disclosed herein to a 3G and Long-Term Evolution (LTE) network. In LTE netwoks, it is assumed that SCTP associations between nodes are persistent, and that one side of the connection may be an ephemeral port. For simplification, short-lived SCTP associations may not be handled initially. In one embodiment, 40 probes are used to monitor the network, which corresponds to approximately 1000 eNodeBs and MMEs per probe and 20,000 4-path associations per probe.

The following processing logic is used for Gn/Gi node detection in one embodiment. A traffic processor receives a GTPv1 Control PDU and successfully decodes it. Any PDUs that fail to decode are discarded. A topology analyzer running in the same traffic processor thread receives the PDU and checks the endpoint addresses against known IDs. If both IDs are known, detection is complete. If one or both of the IDs is zero, the PDU is passed to protocol-specific processing module, such as a GTP v1 processor in this example. Based on protocol-specific detection logic, GGSN and SGSN nodes are detected. The topology analyzer checks its internal temporary table to see if the nodes with these IP addresses have already been sent to a topology agent. If so, detection is complete. If the nodes are new, the topology analyzer creates new network nodes in its temporary table, setting all known attributes, and sends an update to the topology agent. At this point, the topology analyzer is done.

The topology agent receives the update and checks its internal update table to see if nodes with these IP addresses already exist. In one embodiment, the topology agent table is not the same as OA&M topology information. If the nodes are already in the topology agent update table, the detection is complete. If the nodes are new, they are added to the update table. The information about new nodes is merged into the OA&M database, and duplicates are detected. The topology agent and topology analyzer receive the updated nodes from OA&M interface and add them to the active topology set. Updated network node lists are sent to all probes and new node-to-ID mappings are added to the probe tables. All later-detected PDUs from/to these IP addresses will have the correct ID.

In one embodiment, initial S1AP interface detection is performed as follows. Initial detection scenario assumes that the probe is starting from clean slate - i.e. there are no nodes, logical links, or interfaces present in the system. It is further assumed that there is a single-homed association between an MME with IP address A and an eNodeB with IP address B. The MME side uses a fixed port P1, and the eNodeB uses ephemeral port P2. The monitoring probe interface hardware detects a new SCTP association between A-P1 and B-P2 and assigns the association a unique internal identifier. The probe interface hardware broadcasts information about the SCTP association to topology analyzers and topology agents. This information is required to detect logical links and to set correct L4 properties. The topology agent and topology analyzers receive and cache the association information hashed by Association Identifier.

When an S1AP protocol PDU on this SCTP association is successfully processed, it is debundled/reassembled as needed, stamped with S1AP protocol ID, and forwarded to a traffic processor thread. The traffic processor receives the S1AP PDU and successfully decodes it. The topology analyzer receives the PDU and passes it to protocol-specific S1AP processing module. If the topology analyzer observes that both Server IDs and Logical Link ID for the PDU is set to zero, then detection of eNodeB and MME is done at this point. The topology analyzer finds the SCTP association in its table, based on the Association ID passed in the extended packet descriptor, and merges the IP information from SCTP associations to the new nodes.

The topology analyzer enters the new nodes into its update tables, and sends a message to the topology agent with the two new elements. The topology agent receives the update and checks its internal update table to see if nodes with these IP addresses and a logical link with these properties already exist. If new, the elements are entered into update tables and probe-side detection of nodes is complete.

Once the nodes are accepted by the server and assigned unique node IDs, the probe is ready to detect a logical link. When the topology analyzer sees the next PDU between A and B, it will detect the logical link between A-P1 and B-WILDCARD. Logical link data is entered into the table, sent to topology agent and subsequently to the server. Logical link detection will only occur if both nodes already have valid node IDs.

In one embodiment, the system segments the topology by probe. The server OA&M tracks the relationship between network Nodes and monitoring probes. This serves two purposes. First, it gives applications, such as a session analyzer and protocol analyzer, a way to apply node filters without broadcasting to all probes. Second, it limits the number of node updates that get downloaded to the probes via the OA&M.

In another embodiment, to make things simple and fail-proof, the server OA&M may download all nodes, with the exception of eNodeBs, to every probe. While the number of eNodeBs may be in thousands in a network, the number of other nodes is comparatively small - in the range of 10-50 per probe. eNodeBs will only go to a probe if they have that probe assigned in the properties. Once all the nodes and pertinent eNBs are configured on the probe, the processing logic is as follows:
- For nodes that are not monitored by the probe, they will never be observed by the probe and will never be stamped with a node ID by the probe.
- For nodes that are monitored, all applications on the probe will work correctly and immediately upon receipt of the updated node list.
- eNBs that are monitored by the probe, but have not been downloaded, will be auto-detected.
- The probe checks observed nodes in the traffic against the node-to-probe relation from the OA&M list and updates the server if new relations are detected.
- The node-to-probe relation for newly detected nodes is automatically set, since probe ID is part of the detection update message.

The topology detection model used herein allows a network operator to detect nodes and links in an IP-based network without requiring protocol-specific messages. Multiple monitoring probes throughout the network capture data traffic and detect the IP addresses in the data packets. The monitoring probes are distributed throughout the network, and an individual data packet is likely to be detected by multiple probes. Additionally, the same IP address may be identified by different monitoring probes. The topology detection system aggregates the IP addresses and identifies the network nodes. The topology detection system also resolves duplicate detections of data packets and IP addresses from the distributed monitoring network. The topology detection system may also identify the type of each node. The node type information allows the system to evaluate the relevance of each node, such as the impact of a node's failure on the operation of the network.

Many modifications and other embodiments of the invention will come to mind to one skilled in the art to which this invention pertains having the benefit of the teachings presented in the foregoing descriptions, and the associated drawings. Therefore, it is to be understood that the invention is not to be limited to the specific embodiments disclosed. Although specific terms are employed herein, they are used in a generic and descriptive sense only and not for purposes of limitation.

## Claims

1. A network monitoring system comprising:
a monitoring system server (112, 301) comprising a topology maintenance agent (307,405) designed to maintain current network topology information,
**characterized by**
one or more monitoring probes (110, 111, 302) coupled to network interfaces (105-108), wherein each probe (110, 111, 302) is designed to capture data packets from the network interfaces (105-108),
the monitoring probes (110, 111, 302) further comprising one or more topology analyzers (303, 402), wherein each topology analyzer (303, 402) is designed to receive the captured data packets and compare the captured data packets to a known network element list and identify new network elements that are not on the known network element list,
the monitoring probes (110, 111, 302) further comprising a probe topology agent (304, 403), wherein the topology agent (304, 403) is designed to receive data from the one or more topology analyzers (303, 402) regarding the new network elements and resolve overlapping detections of a same new network element from different topology analyzers (303, 402); and wherein
the monitoring system server (112, 301) is coupled to the one or more probes (110, 111, 302),
the monitoring system comprising a server topology agent (305, 404) coupled to each probe topology agent (304, 403) on the one or more probes (110, 111, 302), wherein the server topology agent (305, 404) is designed to receive data from each probe topology agent (304, 403) regarding the new network elements and resolve overlapping detections of the same new network element from different probe topology agents (304, 403),
the topology maintenance agent (307, 405) of the monitoring system server (11, 301) further being designed to provide updated network element lists to the probe topology analyzers (303, 402).

2. The network monitoring system of claim 1, wherein the known network element list comprises physical ports (109) in the network.

3. The network monitoring system of claim 1, wherein the known network element list comprises physical links in the network.

4. The network monitoring system of claim 1, wherein the known network element list comprises network nodes (101-104) in the network.

5. The network monitoring system of claim 1, wherein the known network element list comprises logical links in the network.

6. The network monitoring system of claim 1, further comprising:
one or more Stream Control Tracking Protocol, SCTP, tracking modules (309), wherein each SCTP tracking module is designed to receive the captured data packets and compare the captured data packets to a known SCTP association list and identify new SCTP associations that are not on the known SCTP association list.

7. A computer-readable storage medium comprising instructions for controlling a monitoring system to identify a network topology based upon data packets captured from network interfaces (105-108), wherein the instructions, when executed, cause a processor to perform actions comprising:
determining whether network elements were already identified and are in a list of known network elements;
**characterized by**
receiving the captured data packets by one or more topology analyzers of a plurality of monitoring probes (110, 111, 302) and comparing the captured data packets to a known network element list and identifying new network elements that are not on the known network element list;
receiving data by a probe topology agent of the monitoring probes from the one or more topology analyzers (303, 402) regarding the new network elements and resolving overlapping detections of a same new network element from different topology analyzers (303, 402);
receiving data by a server topology agent from each probe topology agent (304, 403) regarding the new network elements and resolve overlapping detections of the same new network element from different probe topology agents (304, 403);
providing by a topology maintenance agent (307, 405) of a monitoring system server updated network element lists to the probe topology analyzers (303, 402).

8. The computer-readable storage medium of claim 7, wherein the network elements comprise physical ports (109) in a communication network.

9. The computer-readable storage medium of claim 7, wherein the network elements comprise physical links in a communication network

10. The computer-readable storage medium of claim 7, wherein the network elements comprise network nodes (101-104) in a communication network.

11. The computer-readable storage medium of claim 7, wherein the instructions, when executed, further cause a processor to perform actions comprising:
storing the network elements in a data model adapted for mapping a network topology, the data model comprising one or more physical ports (203), the data model further comprising one or more physical links (204) wherein each physical link (204) is associated with one or more of the physical ports (203), the data model further comprising network nodes (206) wherein each network node (206) may be associated with a physical link (204).

12. The computer-readable storage medium of claim 7, wherein the instructions, when executed, further cause a processor to perform actions comprising:
identifying logical links within a communications network, the logical links associated with two or more network nodes (101-104).

13. The computer-readable storage medium of claim 12, wherein the instructions, when executed, further cause a processor to perform actions comprising:
identifying Stream Control Tracking Protocol, SCTP, associations within a communications network, the SCTP associations paired with a logical link.

14. A method for identifying the topology of a network,
**characterized by**:
capturing, via one or more monitoring probes, data packets from network interfaces;
identifying one or more physical ports in the network from the data packets;
storing data for each physical port in a topology data model;
identifying one or more physical links in the network from the data packets;
storing data for each physical link in the topology data model, each physical link associated with one or more physical ports in the topology data model;
identifying one or more network nodes in the network from the data packets;
storing data for each network node in the topology data model, wherein one or more of the network nodes are associated with one or more physical links in the topology data model;
identifying one or more logical links in the network from the data packets;
storing data for each logical link in the topology data model, wherein one or more of the logical links are associated with two or more network nodes in the topology data model;
identifying one or more Stream Control Tracking Protocol, SCTP, associations in the network from the data packets;
storing data for each SCTP association in the topology data model, wherein one or more of the SCTP associations are paired with one of the logical links in the topology data model;
receiving the captured data packets using one or more topology analyzers of the monitoring probes and comparing the captured data packets to a known network element list and identifying new network elements that are not on the known network element list,
receiving data by a probe topology agent of the monitoring probes from the one or more topology analyzers (303, 402) regarding the new network elements and resolving overlapping detections of a same new network element from different topology analyzers (303, 402);
receiving data by a server topology agent from each probe topology agent (304, 403) regarding the new network elements and resolve overlapping detections of the same new network element from different probe topology agents (304, 403);
providing by a topology maintenance agent (307, 405) of a monitoring system server updated network element lists to the probe topology analyzers (303, 402).

15. The method of claim 14, further comprising:
associating each physical port with a particular monitoring probe, wherein multiple physical ports may be associated with a same monitoring probe

16. The method of claim 14, further comprising:
identifying two or more physical links as a physical link group

17. The method of claim 14, further comprising:
identifying two or more network nodes as a network node group.

18. The method of claim 14, further comprising:
identifying two or more logical links as a logical link group.

## Patentansprüche

1. Netzwerküberwachungssystem, umfassend:
einen Überwachungssystemserver (112, 301), der einen Topologiewartungsagenten (307, 405) umfasst, der dafür eingerichtet ist, aktuelle Netzwerktopologieinformation zu pflegen, **gekennzeichnet durch**:
eine oder mehrere Überwachungssonden (110, 111, 302), die mit Netzwerkschnittstellen (105-108) gekoppelt sind, worin jede Sonde (110, 111, 302) dafür eingerichtet ist, Datenpakete von den Netzwerkschnittstellen (105-108) zu erfassen,
wobei die Überwachungssonden (110, 111, 302) ferner einen oder mehrere Topologieanalysatoren (303, 402) umfassen, worin jeder Topologieanalysator (303, 402) dafür eingerichtet ist, die erfassten Datenpakete zu empfangen und die erfassten Datenpakete mit einer Liste bekannter Netzwerkelemente zu vergleichen und neue Netzwerkelemente zu identifizieren, die nicht auf der Liste bekannter Netzwerkelemente stehen,
wobei die Überwachungssonden (110, 111, 302) ferner einen oder mehrere Sonden-Topologieagenten (304, 403) umfassen, worin der Topologieagent (304, 403) dafür eingerichtet ist, Daten bezüglich der neuen Netzwerkelemente von dem einen oder den mehreren Topologieanalysatoren (303, 402) zu empfangen und einander überschneidende Ermittlungen eines gleichen neuen Netzwerkelements von unterschiedlichen Topologieanalysatoren (303, 402) aufzulösen; und worin
der Überwachungssystemserver (112, 301) mit der einen oder den mehreren Sonden (110, 111, 302) gekoppelt ist,
wobei das Überwachungssystem einen Server-Topologieagenten (305, 404) umfasst, der mit jedem Sonden-Topologieagenten (304, 403) an der einen oder den mehreren Sonden (110, 111, 302) gekoppelt ist, worin der Server-Topologieagent (305, 404) dafür eingerichtet ist, Daten bezüglich der neuen Netzwerkelemente von jedem Sonden-Topologieagenten (304, 403) zu empfangen und einander überschneidende Ermittlungen des gleichen neuen Netzwerkelements von unterschiedlichen Sonden-Topologieagenten (304, 403) aufzulösen,
wobei der Topologiewartungsagent (307, 405) des Überwachungssystemservers (112, 301) ferner dafür eingerichtet ist, aktualisierte Netzwerkelementlisten an die Sonden-Topologieanalysatoren (303, 402) zu übergeben.

2. Netzwerküberwachungssystem nach Anspruch 1, worin die Liste bekannter Netzwerkelemente physische Ports (109) im Netzwerk umfasst.

3. Netzwerküberwachungssystem nach Anspruch 1, worin die Liste bekannter Netzwerkelemente physische Verbindungen im Netzwerk umfasst.

4. Netzwerküberwachungssystem nach Anspruch 1, worin die Liste bekannter Netzwerkelemente Netzwerkknoten (101-104) im Netzwerk umfasst.

5. Netzwerküberwachungssystem nach Anspruch 1, worin die Liste bekannter Netzwerkelemente logische Verbindungen im Netzwerk umfasst.

6. Netzwerküberwachungssystem nach Anspruch 1, ferner umfassend:
ein oder mehrere Stromsteuerungsverfolgungsprotokoll-(SCTP-)Verfolgungsmodule (309), worin jedes SCTP-Verfolgungsmodul dafür eingerichtet ist, die erfassten Datenpakete zu empfangen und die erfassten Datenpakete mit einer Liste bekannter SCTP-Verknüpfungen zu vergleichen und neue SCTP-Verknüpfungen zu identifizieren, die nicht auf der Liste bekannter SCTP-Verknüpfungen stehen.

7. Computerlesbares Speichermedium, umfassend Anweisungen zum Steuern eines Überwachunssystems, um auf der Grundlage von Datenpaketen, die von Netzwerkschnittstellen (105-108) erfasst wurden, eine Netzwerktopologie zu identifizieren, worin die Anweisungen, wenn die ausgeführt werden, einen Prozessor veranlassen, Aktionen durchzuführen, die Folgendes umfassen:
Bestimmen, ob Netzwerkelemente bereits identifiziert wurden und auf einer Liste bekannter Netzwerkelemente stehen;
**gekennzeichnet durch**:
Empfangen der erfassten Datenpakete **durch** einen oder mehrere Topologieanalysatoren einer Vielzahl von Überwachungssonden (110, 111, 302) und Vergleichen der erfassten Datenpakete mit einer Liste bekannter Netzwerkelemente und Identifizieren neuer Netzwerkelemente, die nicht auf der Liste bekannter Netzwerkelemente stehen;
Empfangen von Daten bezüglich der neuen Netzwerkelemente von dem einen oder den mehreren Topologieanalysatoren (303, 402) **durch** einen Sonden-Topologieagenten der Überwachungssonden und Auflösen einander überschneidender Ermittlungen eines gleichen neuen Netzwerkelements von unterschiedlichen Topologieanalysatoren (303, 402);
Empfangen von Daten bezüglich der neuen Netzwerkelemente von jedem Sonden-Topologieagenten (304, 403) **durch** einen Server-Topologieagenten und Auflösen einander überschneidender Ermittlungen des gleichen neuen Netzwerkelements von unterschiedlichen Sonden-Topologieagenten (304, 403);
Übergeben aktualisierter Netzwerkelementlisten **durch** einen Topologiewartungsagenten (307, 405) eines Überwachungssystemservers an die Sonden-Topologieanalysatoren (303, 402).

8. Computerlesbares Speichermedium nach Anspruch 7, worin die Netzwerkelemente physische Ports in einem Kommunikationsnetzwerk umfassen.

9. Computerlesbares Speichermedium nach Anspruch 7, worin die Netzwerkelemente physische Verbindungen in einem Kommunikationsnetzwerk umfassen.

10. Computerlesbares Speichermedium nach Anspruch 7, worin die Netzwerkelemente Netzwerkknoten (101-104) in einem Kommunikationsnetzwerk umfassen.

11. Computerlesbares Speichermedium nach Anspruch 7, worin die Anweisungen, wenn sie ausgeführt werden, ferner einen Prozessor veranlassen, Aktionen durchzuführen, die Folgendes umfassen:
Speichern der Netzwerkelemente in einem Datenmodell, das zum Abbilden einer Netzwerktopologie eingerichtet ist, wobei das Datenmodell einen oder mehrere physische Ports (203) umfasst, wobei das Datenmodell ferner einen oder mehrere physische Verbindungen (204) umfasst, worin jede physische Verbindung (204) mit einem oder mehreren der physischen Ports (203) verknüpft ist, wobei das Datenmodell ferner Netzwerkknoten (206) umfasst, worin jeder Netzwerkknoten (206) mit einer physischen Verbindung (204) verknüpft sein kann.

12. Computerlesbares Speichermedium nach Anspruch 7, worin die Anweisungen, wenn sie ausgeführt werden, ferner einen Prozessor veranlassen, Aktionen durchzuführen, die Folgendes umfassen:
Identifizieren logischer Verbindungen innerhalb eines Kommunikationsnetzwerks, wobei die logischen Verbindungen mit zwei oder mehr Netzwerkknoten (101-104) verknüpft sind.

13. Computerlesbares Speichermedium nach Anspruch 12, worin die Anweisungen, wenn sie ausgeführt werden, ferner einen Prozessor veranlassen, Aktionen durchzuführen, die Folgendes umfassen:
Identifizieren von Stromsteuerungsverfolgungsprotokoll-(SCTP-)Verknüpfungen innerhalb eines Kommunikationsnetzwerks, wobei die SCTP-Verknüpfungen mit einer logischen Verbindung gepaart sind.

14. Verfahren zum Identifizieren der Topologie eines Netzwerks,
**gekennzeichnet durch**:
Erfassen von Datenpaketen von Netzwerkschnittstellen mittels einer oder mehrerer Überwachungssonden;
Identifizieren eines oder mehrerer physischer Ports in dem Netzwerk aus den Datenpaketen;
Speichern von Daten für jeden physischen Port in einem Topologiedatenmodell;
Identifizieren einer oder mehrerer physischer Verbindungen in dem Netzwerk aus den Datenpaketen;
Speichern von Daten für jede physische Verbindung in dem Topologiedatenmodell, wobei jede physische Verbindung mit einem oder mehreren physischen Ports in dem Topologiedatenmodell verknüpft ist;
Identifizieren eines oder mehrerer Netzwerkknoten in dem Netzwerk aus den Datenpaketen;
Speichern von Daten für jeden Netzwerkknoten in dem Topologiedatenmodell, worin einer oder mehrere der Netzwerkknoten mit einer oder mehreren physischen Verbindungen in dem Topologiedatenmodell verknüpft sind;
Identifizieren einer oder mehrerer logischer Verbindungen in dem Netzwerk aus den Datenpaketen;
Speichern von Daten für jede logische Verbindung in dem Topologiedatenmodell, worin eine oder mehrere der physischen Verbindungen mit einem oder mehreren Netzwerkknoten in dem Topologiedatenmodell verknüpft sind;
Identifizieren einer oder mehrerer Stromsteuerungsverfolgungsprotokoll-(SCTP-)Verknüpfungen in dem Netzwerk aus den Datenpaketen;
Speichern von Daten für jede SCTP-Verknüpfung in dem Topologiedatenmodell, worin eine oder mehrere der SCTP-Verknüpfungen mit einer der logischen Verbindungen in dem Topologiedatenmodell gepaart sind;
Empfangen der erfassten Datenpakete unter Verwendung eines oder mehrerer Topologieanalysatoren der Überwachungssonden und Vergleichen der erfassten Datenpakete mit einer Liste bekannter Netzwerkelemente und Identifizieren neuer Netzwerkelemente, die nicht auf der Liste bekannter Netzwerkelemente stehen;
Empfangen von Daten bezüglich der neuen Netzwerkelemente von dem einen oder den mehreren Sonden-Topologieanalysatoren (303, 402) **durch** einen Sonden-Topologieagenten der Überwachungssonden und Auflösen einander überschneidender Ermittlungen eines gleichen neuen Netzwerkelements von unterschiedlichen Sonden-Topologieanalysatoren (303, 402);
Empfangen von Daten bezüglich der neuen Netzwerkelemente von jedem Sonden-Topologieagenten (304, 403) **durch** einen Server-Topologieagenten und Auflösen einander überschneidender Ermittlungen des gleichen neuen Netzwerkelements von unterschiedlichen Sonden-Topologieagenten (304, 403);
Übergeben aktualisierter Netzwerkelementlisten **durch** einen Topologiewartungsagenten (307, 405) eines Überwachungssystemservers an die Sonden-Topologieanalysatoren (303, 402).

15. Verfahren nach Anspruch 14, ferner umfassend:
Verknüpfen jedes physischen Ports mit einer bestimmten Überwachungssonde, worin mehrere physische Ports mit einer gleichen Überwachungssonde verknüpft werden können.

16. Verfahren nach Anspruch 14, ferner umfassend:
Identifizieren zweier oder mehrerer physischer Verbindungen als eine Gruppe physischer Verbindungen.

17. Verfahren nach Anspruch 14, ferner umfassend:
Identifizieren zweier oder mehrerer Netzwerkknoten als eine Netzwerkknotengruppe.

18. Verfahren nach Anspruch 14, ferner umfassend:
Identifizieren zweier oder mehrerer logischer Verbindungen als eine Gruppe logischer Verbindungen.

## Revendications

1. Système de surveillance de réseau, comportant :
un serveur de système de surveillance (112, 301) comportant un agent de maintenance de topologie (307, 405) conçu de manière à maintenir des informations de topologie de réseau en cours,
**caractérisé par**
une ou plusieurs sondes de surveillance (110, 111, 302) couplées à des interfaces de réseau (105-108), dans lequel chaque sonde (110, 111, 302) est conçue de manière à capturer des paquets de données en provenance des interfaces de réseau (105-108) ;
les sondes de surveillance (110, 111, 302) comportant en outre un ou plusieurs analyseurs de topologie (303, 402), dans lequel chaque analyseur de topologie (303, 402) est conçu de manière à recevoir les paquets de données capturés et à comparer les paquets de données capturés à une liste d'éléments de réseau connus et à identifier de nouveaux éléments de réseau qui ne sont pas sur la liste d'éléments de réseau connus ;
les sondes de surveillance (110, 111, 302) comportant en outre un agent de topologie de sonde (304, 403), dans lequel l'agent de topologie (304, 403) est conçu de manière à recevoir des données, en provenance dudit un ou desdits plusieurs analyseurs de topologie (303, 402), concernant les nouveaux éléments de réseau, et à résoudre des détections en chevauchement d'un même nouvel élément de réseau provenant de différents analyseurs de topologie (303, 402) ; et dans lequel
le serveur de système de surveillance (112, 301) est couplé à ladite une ou auxdites plusieurs sondes (110, 111, 302) ;
le système de surveillance comportant un agent de topologie de serveur (305, 404) couplé à chaque agent de topologie de sonde (304, 403) sur ladite une ou lesdites plusieurs sondes (110, 111, 302), dans lequel l'agent de topologie de serveur (305, 404) est conçu de manière à recevoir des données, en provenance de chaque agent de topologie de sonde (304, 403), concernant les nouveaux éléments de réseau, et à résoudre des détections en chevauchement du même nouvel élément de réseau provenant de différents agents de topologie de sonde (304, 403) ;
l'agent de maintenance de topologie (307, 405) du serveur de système de surveillance (112, 301) étant en outre conçu de manière à fournir des listes d'éléments de réseau mises à jour aux analyseurs de topologie de sonde (303, 402).

2. Système de surveillance de réseau selon la revendication 1, dans lequel la liste d'éléments de réseau connus comprend des ports physiques (109) dans le réseau.

3. Système de surveillance de réseau selon la revendication 1, dans lequel la liste d'éléments de réseau connus comprend des liaisons physiques dans le réseau.

4. Système de surveillance de réseau selon la revendication 1, dans lequel la liste d'éléments de réseau connus comporte des noeuds de réseau (101-104) dans le réseau.

5. Système de surveillance de réseau selon la revendication 1, dans lequel la liste d'éléments de réseau connus comprend des liaisons logiques dans le réseau.

6. Système de surveillance de réseau selon la revendication 1, comportant en outre :
un ou plusieurs modules de suivi de protocole de suivi de commande de flux, SCTP, (309), dans lequel chaque module de suivi de protocole SCTP est conçu de manière à recevoir les paquets de données capturés et à comparer les paquets de données capturés à une liste d'associations de protocoles SCTP connus, ainsi qu'à identifier de nouvelles associations de protocoles SCTP qui ne sont pas sur la liste d'associations de protocoles SCTP connus ;

7. Support de stockage lisible par ordinateur comportant des instructions visant à commander à un système de surveillance d'identifier une topologie de réseau sur la base de paquets de données capturés à partir d'interfaces de réseau (105-108), dans lequel les instructions, lorsqu'elles sont exécutées, amènent un processeur à mettre en oeuvre des actions consistant à :
déterminer si des éléments de réseau ont déjà été identifiés et sont dans une liste d'éléments de réseau connus ;
**caractérisé par** les actions ci-dessous consistant à :
recevoir les paquets de données capturés par le biais d'un ou plusieurs analyseurs de topologie d'une pluralité de sondes de surveillance (110, 111, 302), et comparer les paquets de données capturés à une liste d'éléments de réseau connus, et identifier de nouveaux éléments de réseau qui ne sont pas sur la liste d'éléments de réseau connus ;
recevoir des données, par le biais d'un agent de topologie de sonde des sondes de surveillance, en provenance dudit un ou desdits plusieurs analyseurs de topologie (303, 402), concernant les nouveaux éléments de réseau, et résoudre des détections en chevauchement d'un même nouvel élément de réseau à partir de différents analyseurs de topologie (303, 402) ;
recevoir des données, par le biais d'un agent de topologie de serveur, en provenance de chaque agent de topologie de sonde (304, 403), concernant les nouveaux éléments de réseau, et résoudre des détections en chevauchement du même nouvel élément de réseau à partir de différents agents de topologie de sonde (304, 403) ;
fournir, par le biais d'un agent de maintenance de topologie (307, 405) d'un serveur de système de surveillance, des listes d'éléments de réseau mises à jour, aux analyseurs de topologie de sonde (303, 402).

8. Support de stockage lisible par ordinateur selon la revendication 7, dans lequel les éléments de réseau comportent des ports physiques (109) dans un réseau de communication.

9. Support de stockage lisible par ordinateur selon la revendication 7, dans lequel les éléments de réseau comportent des liaisons physiques dans un réseau de communication.

10. Support de stockage lisible par ordinateur selon la revendication 7, dans lequel les éléments de réseau comportent des noeuds de réseau (101-104) dans un réseau de communication.

11. Support de stockage lisible par ordinateur selon la revendication 7, dans lequel les instructions, lorsqu'elles sont exécutées, amènent en outre un processeur à mettre en oeuvre des actions consistant à :
stocker les éléments de réseau dans un modèle de données apte à mettre en correspondance une topologie de réseau, le modèle de données comportant un ou plusieurs ports physiques (203), le modèle de données comportant en outre une ou plusieurs liaisons physiques (204), dans lequel chaque liaison physique (204) est associée à un ou plusieurs des ports physiques (203), le modèle de données comportant en outre des noeuds de réseau (206), dans lequel chaque noeud de réseau (206) peut être associé à une liaison physique (204).

12. Support de stockage lisible par ordinateur selon la revendication 7, dans lequel les instructions, lorsqu'elles sont exécutées, amènent en outre un processeur à mettre en oeuvre une action consistant à :
identifier des liaisons logiques dans un réseau de communication, les liaisons logiques étant associées à deux noeuds de réseau ou plus (101-104).

13. Support de stockage lisible par ordinateur selon la revendication 12, dans lequel les instructions, lorsqu'elles sont exécutées, amènent en outre un processeur à mettre en oeuvre une action consistant à :
identifier des associations de protocoles de suivi de commande de flux, SCTP, au sein d'un réseau de communication, les associations de protocoles SCTP étant jumelées avec une liaison logique.

14. Procédé d'identification de la topologie d'un réseau,
**caractérisé par** les étapes ci-dessous consistant à :
capturer, par l'intermédiaire d'une ou plusieurs sondes de surveillance, des paquets de données en provenance d'interfaces de réseau ;
identifier un ou plusieurs ports physiques dans le réseau à partir des paquets de données ;
stocker des données pour chaque port physique dans un modèle de données de topologie ;
identifier une ou plusieurs liaisons physiques dans le réseau à partir des paquets de données ;
stocker des données, pour chaque liaison physique, dans le modèle de données de topologie, chaque liaison physique étant associée à un ou plusieurs ports physiques dans le modèle de données de topologie ;
identifier un ou plusieurs noeuds de réseau dans le réseau à partir des paquets de données ;
stocker des données, pour chaque noeud de réseau, dans le modèle de données de topologie, dans lequel un ou plusieurs des noeuds de réseau sont associés à une ou plusieurs liaisons physiques dans le modèle de données de topologie ;
identifier une ou plusieurs liaisons logiques dans le réseau à partir des paquets de données ;
stocker des données, pour chaque liaison logique dans le modèle de données de topologie, dans lequel une ou plusieurs des liaisons logiques sont associées à un noeud de réseau ou plus dans le modèle de données de topologie ;
identifier une ou plusieurs associations de protocoles de suivi de commande de flux, SCTP, dans le réseau à partir des paquets de données ;
stocker des données, pour chaque association de protocoles SCTP dans le modèle de données de topologie, dans lequel une ou plusieurs des associations de protocoles SCTP sont jumelées avec l'une des liaisons logiques dans le modèle de données de topologie ;
recevoir les paquets de données capturés, en utilisant ledit un ou lesdits plusieurs analyseurs de topologie des sondes de surveillance, et comparer les paquets de données capturés à une liste d'éléments de réseau connus, et identifier de nouveaux éléments de réseau qui ne sont pas sur la liste d'éléments de réseau connus ;
recevoir des données, par le biais d'un agent de topologie de sonde des sondes de surveillance, en provenance dudit un ou desdits plusieurs analyseurs de topologie (303, 402), concernant les nouveaux éléments de réseau, et résoudre des détections en chevauchement d'un même nouvel élément de réseau à partir de différents analyseurs de topologie (303, 402) ;
recevoir des données, par le biais d'un agent de topologie de serveur, provenant de chaque agent de topologie de sonde (304, 403), concernant les nouveaux éléments de réseau, et résoudre des détections en chevauchement du même nouvel élément de réseau à partir de différents agents de topologie de sonde (304, 403) ;
fournir, par le biais d'un agent de maintenance de topologie (307, 405) d'un serveur de système de surveillance, des listes d'éléments de réseau mises à jour, aux analyseurs de topologie de sonde (303, 402).

15. Procédé selon la revendication 14, comportant en outre l'étape ci-dessous consistant à :
associer chaque port physique à une sonde de surveillance spécifique, dans lequel de multiples ports physiques peuvent être associés à une même sonde de surveillance.

16. Procédé selon la revendication 14, comportant en outre l'étape ci-dessous consistant à :
identifier deux liaisons physiques ou plus en tant qu'un groupe de liaisons physiques.

17. Procédé selon la revendication 14, comportant en outre l'étape ci-dessous consistant à :
identifier deux noeuds de réseau ou plus en tant qu'un groupe de noeuds de réseau.

18. Procédé selon la revendication 14, comportant en outre l'étape ci-dessous consistant à :
identifier deux liaisons logiques ou plus en tant qu'un groupe de liaisons logiques.
